# EUROPÄISCHE PATENTSCHRIFT

(11) **EP 2 754 268 B1**
(45) Veröffentlichungstag und Bekanntmachung des Hinweises auf die Patenterteilung: **06.04.2016**
(21) Anmeldenummer: 12759016.4
(22) Anmeldetag: 05.09.2012
(51) Int. Cl.: H04L 12/28, H04W 4/04, H04L 29/08, H04L 12/40, H04B 1/38, H04W 48/04, H04W 4/00, B60W 50/00, H04B 1/20, H04B 1/3822

(54) **FAHRZEUGKOMFORTSYSTEM ZUM NUTZEN UND/ODER STEUERN VON FAHRZEUGFUNKTIONEN MITHILFE EINES MOBILGERÄTS**
VEHICLE COMFORT SYSTEM FOR USING AND/OR CONTROLLING VEHICLE FUNCTIONS WITH THE ASSISTANCE OF MOBILE DEVICE
SYSTÈME DE CONFORT DE VÉHICULE POUR L'UTILISATION ET/OU LA COMMANDE DE FONCTIONS D'UN VÉHICULE À L'AIDE D'UN APPAREIL MOBILE

(30) Priorität: 06.09.2011 DE 102011112599
(43) Veröffentlichungstag der Anmeldung: 16.07.2014
(73) Patentinhaber: Volkswagen Aktiengesellschaft, 38440 Wolfsburg (DE)
(72) Erfinder: WÄLLER, Christoph, 38106 Braunschweig (DE)
(86) Internationale Anmeldenummer: PCT/EP2012/003705
(87) Internationale Veröffentlichungsnummer: WO 2013/034285

(56) Entgegenhaltungen:
- WO-A2-03/007588
- US-A1- 2005 094 610
- US-A1- 2009 075 676
- US-A1- 2011 021 234
- US-A1- 2011 208 834

## Beschreibung

Die Erfindung betrifft ein Fahrzeug mit einem Komfortsystem, bei dem Fahrzeugfunktionen oder Fahrzeugsysteme mithilfe eines Mobilgeräts genutzt und/oder gesteuert werden können. Ferner betrifft die Erfindung ein solches Komfortsystem aus einem Fahrzeug und einem Computerprogrammprodukt, welches auf dem Mobilgerät die notwendige Funktionalität zur Nutzung und/oder Steuerung der Fahrzeugfunktionen und/oder -systeme bereitstellt sowie ein Computerprogrammprodukt selbst, welches diese Funktionalitäten bei einer Ausführung des zugehörigen Programmcodes auf dem Mobilgerät bereitstellt.

Moderne Fahrzeuge, insbesondere Kraftfahrzeuge, und hier ganz besonders Personenkraftfahrzeuge, umfassen eine Vielzahl von Fahrzeugsystemen und stellen eine Vielzahl von Fahrzeugfunktionen bereit, die eine Komfortsteigerung für einen Nutzer bewirken. Beispielhaft seien hier Systeme und Funktionen aus dem Bereich der Unterhaltung, beispielsweise ein Autoradio, Mediaplayer unterschiedlicher Art, aber auch Navigationssysteme und andere Assistenzsysteme, beispielsweise Einparkhilfen, Spurhaltassistenten, Klimasysteme, verstellbare Sitzeinrichtungen und Ähnliches erwähnt. Für eine Nutzung einer Reihe dieser Funktionalitäten, die die Fahrzeugsysteme und/oder Fahrzeugfunktionen bereitstellen, sind Bedieneinrichtungen und teilweise zusätzlich Ausgabeeinrichtungen notwendig. Zur Ausgabe von Navigationsdaten, die einen Fahrer beim Auffinden der abzufahrenden Route helfen, um ein vorgegebenes Ziel zu erreichen, ist es beispielsweise üblich, akustische, gesprochene Informationen und Anweisungen auszugeben und in der Regel zusätzlich oder alternativ auf eine Anzeigefläche einer Anzeigeeinrichtung vorab Richtungsinformationen, beispielsweise eingeblendet in eine Karte einer aktuellen Umgebung des Fahrzeugs auszugeben. Bei den Entertainmentsystemen werden beispielsweise auf einer Anzeigefläche einer Anzeigeeinrichtung Titelauswahllisten angezeigt, anhand derer ein Nutzer, über eine Betätigung einer Bedieneinrichtung einen Titel auswählen kann, der dann über ein Audiosystem, welches in dem Fahrzeug verbaut ist, wiedergegeben wird.

Aus dem Stand der Technik ist es einerseits bekannt, Ausgabe- und Bedieneinrichtungen im Griff- und Bedienbereich des Fahrers vorzusehen, sodass dieser die Systeme bedienen kann. Teilweise werden Multifunktionsbedieneinrichtungen, welche Funktionalitäten eines Navigationssystems sowie eines Entertainmentsystems bereitstellen, in einer Mittelkonsole zwischen einem Fahrer- und einem Beifahrersitz angeordnet, sodass auch eine Bedienung durch den Beifahrer möglich ist. Darüber hinaus ist es auch bekannt, eine Vielzahl von Anzeigeeinrichtungen und/oder Anzeige- und Bedieneinrichtungen vor einzelnen Sitzplätzen einzubauen, um eine individuelle Nutzung von Entertainmentfunktionalitäten den einzelnen Mitfahrern in einem Kraftfahrzeug zu ermöglichen. Ein technischer Aufwand hinsichtlich einer Verkabelung und der hierfür benutzten Hardwarekomponenten ist jedoch erheblich, sodass dieses bisher nur in höherpreisigen Fahrzeugen üblich ist.

Aus der US 2011/0021234 A1 sind ein Verfahren und ein System zum Steuern einer mobilen Kommunikationsvorrichtung in einem bewegten Fahrzeug bekannt. Das Verfahren und das System bestimmen, ob das Fahrzeug von einem Nutzer bedient wird, der zusätzlich Zugriff auf eine mobile Kommunikationsvorrichtung hat, deren Benutzung, während das Fahrzeug in Betrieb ist, einen unsicheren Betrieb des Fahrzeugs herbeiführen könnte. Falls dieses der Fall ist, wird der Zugriff auf mobile Dienste verweigert, die ansonsten von der mobilen Kommunikationsvorrichtung zur Verfügung gestellt werden.

Aus der WO 03/007588 A2 sind ein System und ein Verfahren zum Zugreifen auf universelle Ressourcen in einer intelligenten Umgebung bekannt. Ein drahtloses Terminal wird in die Lage versetzt, universelle Vorrichtungen, wie beispielsweise Fernseher, DVD-Player oder Ähnliches zu bedienen. Nach Anmeldung bei einem Server werden in der Umgebung des genutzten Zugangspunktes verfügbare universelle Vorrichtungen an das Terminal übermittelt. Die Darstellung kann in Form einer Karte erfolgen.

Aus der US 2009/0075676 A1 sind ein System und ein Verfahren zum Verwalten von Ortsinformationen in einem Heimnetzwerk bekannt. Das System umfasst Vorrichtungsverwaltungsmittel zum Sammeln von Informationen über Vorrichtungen in dem Heimnetzwerk, um eine Vorrichtungstabelle zu bilden, Ortsverwaltungsmittel zum Erzeugen einer Raumdatenstruktur einschließlich eines Rastergitterraumplans und Assoziieren der Vorrichtungstabelle mit der Raumdatenstruktur auf Basis der Orte der Heimnetzwerkvorrichtungen und ein Benutzerschnittstellenmodul zum Empfangen eines Orts einer Heimnetzvorrichtung zum übertragen der eingegebenen Ortsinformation an die Ortsverwaltungsmittel. Da die Ortsinformationen der Heimnetzwerkvorrichtungen direkt eingegeben werden, können genaue ortsbasierte Heimnetzwerkdienste angeboten werden.

Aus der US 2005/0094610 A1 sind ein System und ein Verfahren für eine Ortsbestimmung einer Steuervorrichtung bekannt. Eine Steuervorrichtung wie eine Fernbedienung weist eine Programmierung zum Übertragen eines Antwortsignals in einer Vielzahl von Steuerungsumgebungen auf, wobei jede Umgebung eine Signalisierungsvorrichtung umfasst. Jede Signalisierungsvorrichtung, die ein Abfragesignal erhält, sendet ein Antwortsignal, welches eine eindeutige Identifikation umfasst und so gewählt ist, dass es von dem umgebenden Umfeld abgeschwächt wird. Da die Steuervorrichtung zu einem Zeitpunkt nur in einer Umgebung sein kann und aufgrund der Abschwächung der Antwortsignale der Signalisierungsvorrichtungen, wird nur ein Antwortsignal von der Steuervorrichtung in jeder Umgebung empfangen. Die Ortsbestimmung ist mit der empfangenen eindeutigen Identifizierung verknüpft und kann genutzt werden, um in der Steuervorrichtung Einprogrammierungen für gespeicherte Vorrichtungszustände, Bediensätze oder Ähnliches oder sogar dynamisch generierte Kommandos basierend auf der Ortsinformation abzurufen.

Aus der US 2011/0208834 A1 ist ein bordeigenes Informationssystem bekannt, welches eine Mehrzahl von bordeigenen Vorrichtungen und eine externe Kommunikationseinrichtung, die mit einem fahrzeuginternen Netzwerk verbunden ist, sowie eine Vielzahl von mobilen Vorrichtungen umfasst, die mit der externen Kommunikationsvorrichtung kommunikationstechnisch verbunden sind. Eine mobile Vorrichtung überträgt eine Kommunikationsanforderung an die externe Kommunikationseinheit, welche eine der anfragenden Mobilvorrichtung zugeordnete Kennung überträgt und ein initiales Bedienbild an die anfragende Mobilvorrichtung übermittelt. Die anfragende mobile Vorrichtung überträgt eine bordeigene Vorrichtung, die in dem initialen Bedienbild ausgewählt ist, und die Kennung an die externe Kommunikationseinheit, die, wenn die Kennung gültig ist, ein Vorrichtungsbedienbild an die anfragende mobilen Vorrichtung überträgt. Die anfragende mobile Vorrichtung überträgt einen Befehl, der aus dem Vorrichtungsbedienbild ausgewählt ist, an die bordeigene Vorrichtung, welche ein Verarbeitungsresultat, welches mit dem Befehl korrespondiert, an die anfragende mobile Vorrichtung über die externe Kommunikationseinheit sendet. Die anfragende mobile Vorrichtung gibt das Verarbeitungsergebnis aus.

In der DE 2009 025 433 A1 ist zur Anbindung mehrerer gleich- und /oder verschiedenartiger Geräte mit Kommunikationsmitteln zum externen Datenaustausch an eine integrierte Bedien-, Anzeige- und Steuereinrichtung mit Anzeigemitteln zur Anzeige von Bilddaten, Lautsprechermitteln zur Wiedergabe akustischer Daten, Steuerungsmitteln und Kommunikationsmitteln zum externen Datenaustausch in einem Kraftfahrzeug, ein Funktionsmodul vorgeschlagen, dass erste Kommunikationsmittel zum externen Datenaustausch mit der integrierten Bedien-, Anzeige-, Kommunikations- und Steuereinrichtung, eine Anzahl weiterer Kommunikationsmittel zum externen Datenaustausch mit den Geräten sowie eine Übersetzungseinrichtung umfasst und dazu eingereichtet ist, von den Geräten und der Bedien-, Anzeige- und Steuereinrichtung empfangene Daten in Bezug auf ein in der Übersetzungseinrichtung festgelegtes mögliches Zusammenwirken der Geräte mit der integrierten Bedien-, Anzeige- und Steuereinrichtung zu verarbeiten und das Ergebnis der Verarbeitung an die Geräte und/oder die integrierte Bedien-, Anzeige- und Steuereinrichtung zu senden. Dies soll dem Fahrzeugnutzer ermöglichen, eine einfache Anwendung verschiedener Geräte an eine in dem Kraftfahrzeug vorhandene integrierte Bedien-, Anzeige- und Steuereinrichtung zu ermöglichen. Hierbei ist der Fahrzeugnutzer nicht auf ein spezielles Gerät oder eine spezielle Geräteklasse festgelegt, sondern kann nach Erwerb des Kraftfahrzeugs neuartige zusätzliche Geräte über nachgerüstete Funktionsmodule mit entsprechenden Funktionsumfang anbinden.

Aus der US 2010/0048244 A1 ist ein System zur Fernsteuerung von Fahrzeugsystemen bekannt. Das System zur Fernsteuerung umfasst eine Verbindungsvorrichtung, die über einen Fahrzeugdatenbus, beispielsweise einen CAN-Bus mit einem zentralen Computer des Fahrzeugs verbunden ist. Das System umfasst ferner Fernsteuerungsvorrichtungen, die mit der Verbindungsvorrichtung kommunizieren, über welche die verschiedenen in dem Fahrzeug installierten Einrichtungen gesteuert werden.

Aus der GB 2461715 A ist ein Innerfahrzeugandocksystem für elektronische Vorrichtungen, beispielsweise eine Fernsteuereinrichtung, eine Navigationsvorrichtung, ein Mobilfunktelefon, einen MP3-Player oder Ähnliches bekannt. Das umfasst ein tablettartiges Gehäuse mit einem Unterstützungselement oder einem Trägerarm, der schwenkbar bezüglich des Gehäuses befestigt ist. An dem Unterstützungselement ist ein Befestigungsmechanismus vorhanden, der eine lösbare Befestigung der elektronischen Vorrichtung ermöglicht. Das Unterstützungselement kann zwischen einer ersten Stellung, in der das elektronische Gerät, welches an dem Unterstützungselement angebracht ist, in dem Gehäuse aufgenommen ist, und einer zweiten Stellung bewegt werden, in der die elektronische Vorrichtung sich aus dem Gehäuse erstreckt und von dem Unterstützungselement abgehoben werden kann. Das Unterstützungselement ist elastisch zur zweiten Stellung hin vorgespannt und Verriegelungsmittel können das Unterstützungselement in der ersten Position festhalten. Ferner sind elektronische Kontakte vorgesehen, um in entsprechende Kontakte der elektronischen Vorrichtung einzugreifen, wenn diese auf dem Unterstützungselement angeordnet ist. Das Gehäuse kann beispielsweise als Teil einer Armstütze oder einer Mittelkonsole ausgebildet sein und eine Abdeckklappe aufweisen.

Die bekannten Systeme erfordern jeweils einen hohen technischen Vorrüstaufwand, um elektronische Vorrichtungen, wie beispielsweise Mobiltelefone oder persönliche digitale Assistenten in einem Fahrzeug zur Steuerung und zum Nutzen von Fahrzeugfunktionen verwenden zu können. Aufgabe der Erfindung ist es daher, ein verbessertes Fahrzeug, ein Komfortsystem sowie Computerprogrammprodukt zu schaffen, welches ein mobiles Gerät in die Lage versetzt, mit einem entsprechenden Fahrzeug ein Komfortsystem in dem Fahrzeug zu realisieren.

Die Aufgabe wird erfindungsgemäß durch ein Fahrzeug mit den Merkmalen des Patentanspruchs 1, ein Komfortsystem für ein Fahrzeug mit den Merkmalen des Patentanspruchs 2 sowie ein Computerprogrammprodukt mit den Merkmalen gemäß dem Patentanspruch 10 gelöst. Vorteilhafte Ausgestaltungen der Erfindung ergeben sich aus den Unteransprüchen.

Der Erfindung liegt die Idee zugrunde, im Fahrzeug an unterschiedlichen Verbauorten Identifikationsmodule anzuordnen, die jeweils eine Identifikationskennung umfassen, welche dem jeweiligen Verbauort zugeordnet ist. Die Identifikationsmodule sind so ausgebildet, dass die Identifikationskennung durch ein Mobilgerät, welches eine Identifikationsmodul-Leseeinrichtung umfasst, ausgelesen werden können, sofern das Mobilgerät an das Identifikationsmodul angenähert ist. Die Identifikationsmodule und die Identifikationsmodul-Leseeinrichtung sind hierbei so ausgebildet, dass ein Auslesen der Identifikationskennung nur in einem Nahbereich zu dem Verbauort des jeweiligen Identifikationsmoduls möglich ist. Das Mobilgerät baut über eine Mobilgerätkommunikationseinrichtung mit einer Kommunikationsvorrichtung des Fahrzeugs eine drahtlose Kommunikationsverbindung auf und stellt abhängig von der erfassten Identifikationskennung unterschiedliche Funktionalitäten im Datenaustausch über die Kommunikationsverbindung für einen Nutzer bereit. Hierbei wird eine Auswahl der dem Nutzer angebotenen Funktionalitäten hinsichtlich einer Steuerung und Nutzungsmöglichkeit von Fahrzeugfunktionen abhängig von der Identifikationskennung und somit abhängig von dem Verbauort bereitgestellt. Ist das Identifikationsmodul beispielsweise im Fond des Kraftfahrzeugs angebaut, so werden beispielsweise Funktionalitäten zur Benutzung und Steuerung, des Audiosystems des Fahrzeugs und/oder von Belüftungs- und Klimatisierungseinrichtungen im Fond des Fahrzeugs bereitstellt. Nicht hingegen werden beispielsweise Funktionalitäten bereitgestellt, welche Parameter von sicherheitsrelevanten Fahrzeugsystemen betreffen, beispielsweise Spurhalterassistenten oder optischen und akustischen Einparkhilfen. Ist das Identifikationsmodul beispielsweise vor dem Fahrersitzplatz des Kraftfahrzeugs angebaut, so werden beispielsweise Funktionalitäten bereitgestellt, welche Parameter von sicherheitsrelevanten Fahrzeugsystemen betreffen, beispielsweise Spurhalterassistenten oder optischen und akustischen Einparkhilfen. Zudem kann die Bedienung von Tasten am Mobilgerät oder eines Touchscreens des Mobilgeräts unterbunden werden und die Bedienung des Mobilgeräts nur über weitere im Fahrzeug vorhandene Bedienelemente (z.B. Bedienelemente am Lenkrad) zugelassen sein, wenn die Erreichbarkeit des Mobilgeräts durch den Fahrer beispielsweise durch das Lenkrad erschwert ist oder aus Sicherheitsgründen nicht möglich ist. Dieses ist beispielsweise der Fall, wenn der Verbauort vor einem Kombiinstrument oder zwischen dem Kombiinstrument und der Scheibenwurzel der Frontscheibe angeordnet ist. Der Vorteil der Erfindung liegt darin, dass ein Mobilgerät alternativ an unterschiedlichen Stellen des Fahrzeugs eingesetzt werden kann und jeweils die für den jeweiligen Einsatzort vorgesehenen und/oder zugelassenen Funktionalitäten bereitgestellt werden. Da die Kommunikation mit dem Fahrzeug über eine Fahrzeugkommunikationsvorrichtung drahtlos erfolgt, kann eine Verkabelung im Fahrzeug unterbleiben. Die Identifikationsmodule und eine Nahbereichsausleseeinrichtung, welche hier als Identifikationsmodul-Leseeinrichtung bezeichnet wird, sind Voraussetzung dafür, die verbauortabhängige Funktionsbereitstellung und/oder Funktionseinschränkung zu gewährleisten.

Insbesondere wird ein Fahrzeug mit einem Komfortsystem vorgeschlagen, welches umfasst: eine Fahrzeugsteuerungsvorrichtung, mittels derer unterschiedliche Fahrzeugsysteme und/oder Fahrzeugfunktionen steuer- und/oder nutzbar sind; mindestens eine Fahrzeugkommunikationsvorrichtung zum Austauschen von Daten über eine drahtlose Kommunikationsstrecke; mehrere im Fahrzeug angeordnete Identifikationsmodule, welche eine in einem Nahbereich des Identifikationsmoduls auslesbare Identifikationskennung umfassen, welche einem jeweiligen Verbauort des Identifikationsmoduls, vorzugsweise eineindeutig, zugeordnet ist, wobei die Fahrzeugsteuerungsvorrichtung ausgebildet ist, über die Fahrzeugkommunikationsvorrichtung eine Kommunikationsverbindung mit einem Mobilgerät auszubilden, eine von dem Mobilgerät ausgelesene Identifikationskennung eines der im Fahrzeug angeordneten Identifikationsmodule über die Kommunikationsverbindung zu empfangen und selektiv abhängig von der empfangenen Identifikationskennung eine Steuerung und/oder Nutzung von einzelnen oder allen Fahrzeugfunktionen und/oder -systemen über das Mobilgerät und die Kommunikationsverbindung zuzulassen oder zu unterbinden.

Ferner wird ein Komfortsystem für ein Fahrzeug vorgeschlagen, welches umfasst: ein Fahrzeug mit: einer Fahrzeugsteuerungsvorrichtung, mittels derer unterschiedliche Fahrzeugsysteme und/oder Fahrzeugfunktionen steuerbar und/oder nutzbar sind; mindestens einer Fahrzeugkommunikationsvorrichtung zum drahtlosen Austauschen von Daten mit einem Mobilgerät; mehrere im Fahrzeug angeordnete Identifikationsmodule, welche eine in einem Nahbereich des Identifikationsmoduls auslesbare Identifikationskennung umfassen, welche einem jeweiligen Verbauort des Identifikationsmoduls, vorzugsweise eineindeutig, zugeordnet ist; und ein Computerprogrammprodukt, welches Programmcode umfasst, der auf einer programmgesteuerten Verarbeitungseinrichtung (CPU) eines Mobilgeräts ausführbar ist, welches: eine Identifikationsmodul-Leseeinrichtung zum Auslesen der Identifikationskennungen aus Identifikationsmodulen im Nahbereich eines jeweiligen Identifikationsmoduls, mindestens einer Eingabeeinrichtung zum Erfassen von Nutzereingaben, mindestens eine Ausgabeeinrichtung sowie eine Mobilgerätkommunikationseinrichtung umfasst, die jeweils über die programmgesteuerte Verarbeitungseinrichtung ansteuerbar sind, wobei der Programmcode ausgebildet ist, die Identifikationsmodul-Leseeinrichtung anzusteuern, um mit dieser die Identifikationskennung eines der Identifikationsmodule in einem Erfassungsbereich der Identifikationsmodul-Leseeinrichtung zu erfassen, für den Fall, dass eine Identifikationskennung erfasst ist, eine drahtlose Kommunikationsverbindung zum Austauschen von Daten mit der Fahrzeugsteuerungsvorrichtung über die Mobilgerätkommunikationseinrichtung und die Fahrzeugkommunikationsvorrichtung aufzubauen und abhängig von der erfassten Identifikationskennung und/oder den über die Kommunikationsverbindung ausgetauschten Daten unterschiedliche Funktionalitäten der Fahrzeugsysteme und/oder Fahrzeugfunktionen für einen Benutzer mittels der mindestens einen Ausgabeeinrichtung und/oder der mindestens einen Eingabeeinrichtung bereitzustellen.

Weiter wird ein Computerprogrammprodukt für ein fahrzeugbezogenes Komfortsystem vorgeschlagen, wobei das Computerprogrammprodukt Programmcode umfasst, der auf einer programmgesteuerten Verarbeitungseinrichtung (CPU) eines Mobilgeräts ausführbar ist, welches eine Identifikationsmodul-Leseeinrichtung zum Auslesen von Identifikationskennungen aus Identifikationsmodulen in einem Nahbereich der Identifikationsmodule, mindestens eine Eingabeeinrichtung zum Erfassen von Nutzereingaben, mindestens eine Ausgabeeinrichtung sowie eine Mobilgerätkommunikationseinrichtung umfasst, wobei die verschiedenen Einrichtungen des Mobilgeräts jeweils über die programmgesteuerte Verarbeitungseinrichtung steuerbar sind, wobei der Programmcode ausgebildet ist, die Identifikationsmodul-Leseeinrichtung anzusteuern, um mit dieser die Identifikationskennung eines der Identifikationsmodule in einem Erfassungsbereich des Identifikationsmodul-Lesegeräts zu erfassen, für den Fall, dass die Identifikationskennung erfasst ist, eine drahtlose Kommunikationsverbindung zum Austausch von Daten mit einer Fahrzeugsteuerungsvorrichtung über die Mobilgerätkommunikationseinrichtung und eine Fahrzeugkommunikationsvorrichtung aufzubauen und abhängig von der erfassten Identifikationskennung und/oder den ausgetauschten Daten unterschiedliche Funktionalitäten von Fahrzeugsystemen und/oder Fahrzeugfunktionen des Fahrzeugs für einen Benutzer mittels der mindestens einen Ausgabeeinrichtung und/oder der mindestens einen Eingabeeinrichtung bereitzustellen. Das Computerprogrammprodukt kann auf einem Datenträger, beispielsweise einer SD-Kartenspeichereinrichtung, einem USB-Stick, einer CD, DVD oder einem beliebigen anderen Pixelspeichermedium abgespeichert sein. Ebenso kann der Programmcode des Computerprogrammprodukts in einem Speicher des Fahrzeugs abgelegt sein und von dem Mobilgerät über eine drahtlose Kommunikationsverbindung aus dem Fahrzeug abgerufen werden. Bei anderen Ausführungsformen kann vorgesehen sein, dass eine an das jeweilige Modell des Mobilgeräts angepasste Version des Computerprogrammprodukts über ein Computernetzwerk, beispielsweise das Internet, von einem Server, beispielsweise einem Server des Fahrzeugherstellers abgerufen werden kann. Ein entsprechend vorgerüstetes Fahrzeug und ein mit dem Computerprogrammprodukt versehenes, geeignetes Mobilgerät können somit gemeinsam ein Fahrzeugkomfortsystem bereitstellen, bei dem ein Mobilgerät an unterschiedlichen Stellen im Fahrzeug unterschiedliche Funktionalitäten für einen Benutzer bereitstellt.

Bei einer bevorzugten Ausführungsform ist vorgesehen, dass die Fahrzeugsteuervorrichtung eine Berechtigungssteuerungseinrichtung umfasst, welche in Abhängigkeit von der. übermittelten Identifikationskennung eine Berechtigung für ein Auslösen oder ein Bedienen der Fahrzeugfunktionen und/oder Fahrzeugsysteme sowie eine Berechtigung für eine Rückübermittlung von Daten der Fahrzeugsysteme und/oder Fahrzeugfunktionen an das Mobilgerät steuert. Hierüber kann sichergestellt werden, dass nur ein Mobilgerät, welches im Nahbereich eines Identifikationsmoduls des Fahrzeugs befindlich ist, auch auf Funktionalitäten des Fahrzeugs zugreifen kann. Ein Zugriff auf Fahrzeugfunktionen und Fahrzeugsysteme durch Mobilgeräte Dritter, wird hierdurch effektiv unterbunden.

Bei einer anderen Ausführungsform der Erfindung ist vorgesehen, dass die Fahrzeugsteuerungsvorrichtung ausgebildet ist, die Kommunikationsverbindung nur auszubilden, wenn beim Aufbau der Kommunikationsverbindung eine Identifikationserkennung übertragen wird, die einem der in dem Fahrzeug verbauten Identifikationsmodule zugeordnet ist. Auch dies stellt sicher, dass die Fahrzeugfunktionen und Fahrzeugsysteme nur durch ein Mobilgerät genutzt werden können, welches sich im Fahrzeug in der Nähe eines Identifikationsmoduls befindet.

Um darüber hinaus sicherzustellen, dass die Nutzung nur mit einem Computerprogrammprodukt erfolgt, welches beispielsweise durch den Fahrzeughersteller autorisiert ist, ist bei einer Ausführungsform der Erfindung vorgesehen, dass die Fahrzeugsteuerungseinrichtung ausgebildet ist, das Ausbilden der Kommunikationsverbindung und/oder eine Nutzung und/oder Steuerung der Fahrzeugfunktionen oder Fahrzeugsysteme nur zuzulassen, wenn eine Applikationskennung von Mobilgerät zu der Fahrzeugsteuerungsvorrichtung übertragen wird, die das eine Computerprogrammprodukt identifiziert. Vorzugsweise wird die Applikationskennung zusätzlich zu der erfassten Identifikationskennung ausgewertet.

Zur Ausbildung der Identifikationsmodule werden vorzugsweise passive RFID-Chips eingesetzt. Diese zeichnen sich dadurch aus, dass sie mittels elektromagnetischer Strahlung ausgelesen werden können. Eine eigene Energieversorgung des RFID-Chips zum Auslesen des Speichers des RFID-Chips wird nicht benötigt. Die Energie hierfür wird dann beim Auslesen des RFID-Chips von der Leseeinrichtung ausgesandter elektromagnetischer Strahlung entzogen. Bei geeigneter Ausgestaltung kann erreicht werden, dass eine genormte Leseeinrichtung nur in einem unmittelbaren Nahbereich in einem Abstand von maximal 50 cm, vorzugsweise von weniger als 50 cm, vorzugsweise bis etwa 10 cm, von dem RFID-Tag ausgelesen werden kann. Dies kann durch die Ausgestaltung des RFID-Moduls und insbesondere der darin verwendeten Materialien sichergestellt werden. Chips die eine Kommunikation nach dem Near Field Communication (NFC) Standard ausführen, werden auch als RFID-Chips angesehen. Alle mittels elektromagnetischer Strahlung berührungslos elektronisch auslesbaren Vorrichtungen werden als RFID-Chips aufgefasst.

Vorzugsweise ist der Programmcode so ausgebildet, die Identifikationsmodul-Leseeinrichtung so zu steuern, dass diese kontinuierlich oder in Intervallen die Identifikationskennung des im Erfassungsbereich befindlichen oder vermuteten Identifikationsmoduls ausliest, und eine Bereitstellung der Funktionalitäten der Fahrzeugsysteme und Fahrzeugfunktionen beendet wird, sobald das Auslesen fehlschlägt oder eine Änderung der Identifikationskennung erkannt wird. Hierdurch wird sichergestellt, dass die Funktionalität nur bereitgestellt wird, solange sich das Mobilgerät in unmittelbarer Nähe des jeweiligen Identifikationsmoduls befindet.

Alternativ oder zusätzlich kann auch die Steuerungsvorrichtung des Fahrzeugs eine Übermittlung der Identifikationskennungen in regelmäßigen Abständen verlangen und/oder prüfen.

Um zu verhindern, dass eine einmal eingelesene Identifikationskennung mehrfach verwendet werden kann, können die Identifikationsmodule so ausgestaltet sein, dass diese eine beim Auslesen übermittelte Abfrageinformation oder eine Abfragekennung mit der Identifikationskennung oder einer der Identifikationskennung zugeordneten zweiten Kennung codieren und zurückübermitteln. Hierüber wird der Fahrzeugsteuerungsvorrichtung die Möglichkeit gegeben, anhand der zurück übermittelten codierten Abfragekennung und gegebenenfalls zusätzlich der Identifikationskennung zu prüfen, ob der übermittelte Abfragewert oder die Abfragekennung korrekt von dem Identifikationsmodul mittels der Identifikationskennung oder der weiteren Kennung codiert wurde. Die Codierung kann beispielsweise nach einem sogenannten asymmetrischen Verschlüsselungsverfahren erfolgen, bei dem zu jeder weiteren Kennung, die in einem der Identifikationsmodule abgespeichert ist, in der Fahrzeugsteuerungsvorrichtung jeweils eine zugehörige Kennung abgelegt ist, anhand derer die von dem Identifikationsmodul codierte Abfragekennung der Fahrzeugsteuerungsvorrichtung hinsichtlich der korrekten Codierung/Verschlüsselung in der Fahrzeugsteuerungsvorrichtung überprüft werden kann. Wird die Identifikationskennung nicht korrekt übermittelt oder ist die Codierung der Abfragekennung falsch, so wird die Kommunikationsverbindung abgebrochen.

Besonders bevorzugt ist an den Verbauorten der Identifikationsmodule eine Halterung zur Aufnahme des Mobilgeräts angeordnet oder ausgebildet. Bei einer Ausführungsform kann die Halterung ein oder mehrere elastische Elemente umfassen, in oder zwischen die das Mobilgerät klemmbar ist. Beispielsweise können das oder die elastischen Elemente aus einem Schaumgummimaterial gebildet sein und an die spezielle Form eines Mobilgeräts angepasst sein. Hierbei ist der verbleibende Freiraum vorzugsweise so gewählt, dass dieser etwas geringer als die Abmessungen des Gerätes ist, sodass das Gerät im aufgenommenen Zustand durch das oder die elastischen Elemente klemmend arretiert ist. Andere Halterungen können ein oder mehrere federelastische Haken oder Schnappelemente umfassen, die um Kanten und/oder Ecken des Mobilgeräts gerastet werden können, um dieses aufzunehmen, Vorzugsweise sind die Halterungen so ausgebildet, dass diese mit einer Abdeckung verschlossen werden können, welche bündig mit einer umgebenden Oberfläche des jeweiligen Fahrzeugbauteils abschließen, an dem die Halterung angebracht oder ausgebildet ist.

Die Fahrzeugkommunikationsvorrichtung und die Mobilgerätkommunikationseinrichtung sind vorzugsweise ausgebildet, um eine drahtlose Kommunikationsverbindung nach einem standardisierten Übertragungsverfahren auszubilden. Hierbei kommen Übertragungsverfahren in Betracht, die ohne eine Zwischenschaltung einer fahrzeugexternen Vermittlungs- und/oder Übermittlungseinrichtung funktionieren. Insbesondere kommen sogenannte WLAN-Protokolle (Wireless Local Area Network-Protokolle) oder eine Kommunikation nach dem sogenannten Bluetooth-Standard in Frage. Grundsätzlich können jedoch auch andere drahtlose Kommunikationsverfahren zum Einsatz kommen.

Bei einer Ausführungsform ist vorgesehen, dass in dem Fahrzeug mindestens zwei Identifikationsmodule und ggf. die zugeordneten Halterungen an zwei unterschiedlichen der folgenden Verbauorte angeordnet sind: im Armaturenbrett seitlich vor dem Fahrersitz, vor einem Kombiinstrument, zwischen dem Kombiinstrument und einer Scheibenwurzel der Frontscheibe auf dem Armaturenbrett, in der Mittelkonsole zwischen dem Fahrersitz und einem Beifahrersitz, in oder auf dem Armaturenbrett vor dem Beifahrersitz, in einer Rückenlehne des Fahrersitzes, in einer Rückenlehne des Beifahrersitzes, in einer Kopfstütze des Fahrzeugs, in einer Fondtür, am Fahrzeughimmel, vor oder unter einem Rückspiegel. Selbstverständlich können auch andere Einbauorte in Betracht gezogen werden.

Vorzugsweise ist bei einer Ausführungsform des Fahrzeugs bzw. des Komfortsystems mindestens eine Halterung so ausgebildet, dass das in der Halterung angeordnete Mobilgerät, welches eine Digitalkamera mit einer Erfassungsöffnung auf einer gegenüberliegenden Seite von einer Anzeigefläche einer Anzeigeeinrichtung, welche als Ausgabeeinrichtung vorgesehen ist, umfasst, mittels der Digitalkamera eine Umgebung des Fahrzeugs erfassen kann, und dass der Programmcode ausgebildet ist, die Erfassung der Umgebung mittels der Digitalkamera zu veranlassen und auf der Anzeigefläche eine Augmented Reality der Umgebung des Fahrzeugs mithilfe von über die Kommunikationsverbindung übermittelten Daten der Fahrzeugsteuerungsvorrichtung anzuzeigen. Dies kann beispielsweise für solche Funktionalitäten genutzt werden, die ein Einparken unterstützen und mittels Abstandssensoren ermittelte Daten und/oder Navigationsdaten in die erfasste Umgebung mit einblenden. Ebenso können Spurinformationen oder auch erfasst Verkehrsschildinformationen oder Ähnliches in die dargestellte Umgebung als künstliche Symbole eingeblendet werden.

Der Programmcode umfasst bei einer Ausführungsform Module, deren zugeordnete Programmcodeabschnitte bei einer Ausführung auf der programmgesteuerten Verarbeitungseinrichtung mittels der mindestens einen Ausgabeeinrichtung und/oder der mindestens einen Eingabeeinrichtung eine Benutzeroberfläche für eine Steuerung und/oder Nutzung zugeordneter Fahrzeugsysteme oder Fahrzeugfunktionen bereitstellt, wobei der Programmcode ausgebildet ist, die Funktionalität mindestens einzelner Module nur bereitzustellen, sofern eine von dem Fahrzeug empfangene Freigabeinformation vorliegt und/oder die erfasste Identifikationskennung dieses zulässt. Die Identifikationskennungen können so ausgestaltet sein, dass diese, vorzugsweise codiert, Berechtigungsinformationen für einzelne Module umfassen.

Bei einer Ausführungsform ist der Programmcode ausgebildet eine Digitalkamera des Mobilgeräts bei Erfassen mindestens einer Identifikationskennung anzusteuern, um eine Umgebung des Fahrzeugs zu erfassen und auf der Ausgabeeinrichtung des Mobilgeräts einer Augmented Reality der Umgebung des Fahrzeugs mithilfe der über die Kommunikationsverbindung übermittelten Daten der Fahrzeugsteuerungsvorrichtung anzuzeigen.

Nachfolgend wird die Erfindung über die Bezugnahme auf eine Zeichnung näher erläutert. Hierbei zeigen:
- Fig. 1: eine schematische Darstellung eines Fahrzeugs mit einem Komfortsystem;
- Fig. 2: ein schematisches Ablaufdiagramm zur Erläuterung der Erfindung;
- Fig. 3: eine schematische Innenansicht eines Fahrzeugs;
- Fig. 4: eine schematische Explosionszeichnung einer Halterung und
- Fig. 5: eine schematische Darstellung einer weiteren Halterung.

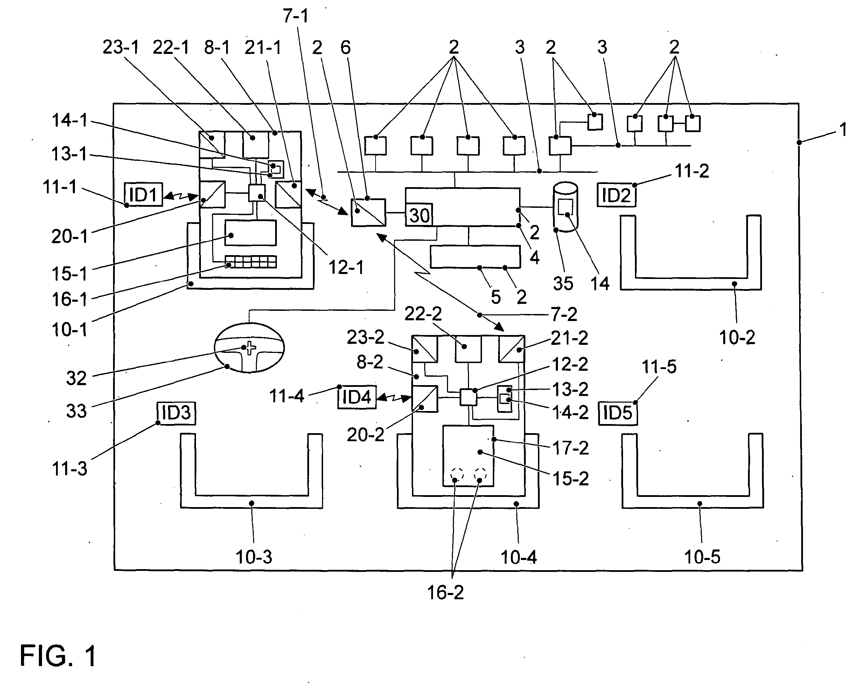

In Fig. 1 ist schematisch ein Fahrzeug 1 dargestellt. Dieses umfasst eine Vielzahl von Fahrzeugsystemen 2, die eine Vielzahl von Funktionen bereitstellen. Fahrzeugsysteme können alle Komponenten des Fahrzeugs sein, beispielsweise Steuergeräte, Aktoren oder Sensoren, um einige zu nennen. Die Fahrzeugsysteme 2 sind über einen oder mehrere Fahrzeugdatenbusse 3 und/oder andere Fahrzeugsysteme mit einer Fahrzeugsteuerungsvorrichtung 4 informationstechnisch direkt oder indirekt verbunden. Die Fahrzeugsteuerungsvorrichtung 4 kann ebenfalls als Fahrzeugsystem 2 aufgefasst werden. Eines der Fahrzeugsysteme 2 ist als Anzeige- und Bedieneinrichtung 5 ausgebildet, über welches Ein- und Ausgaben der Fahrzeugsysteme 2 erfolgen können. Es sind jedoch auch Ausführungsformen ohne eine solche Anzeige- und Bedienvorrichtung 5 denkbar. Die Fahrzeugsteuerungsvorrichtung 4 ist mit einer Fahrzeugkommunikationsvorrichtung 6 informationstechnisch gekoppelt. Die Fahrzeugkommunikationsvorrichtung 6 ist ausgebildet, drahtlose Kommunikationsverbindungen 7-1, 7-2, beispielsweise zu Mobilgeräten 8-1, 8-2 auszubilden. Diese Kommunikationsverbindungen 7-1, 7-2 können beispielsweise als WLAN-Verbindungen oder Bluetooth-Verbindungen ausgebildet sein.

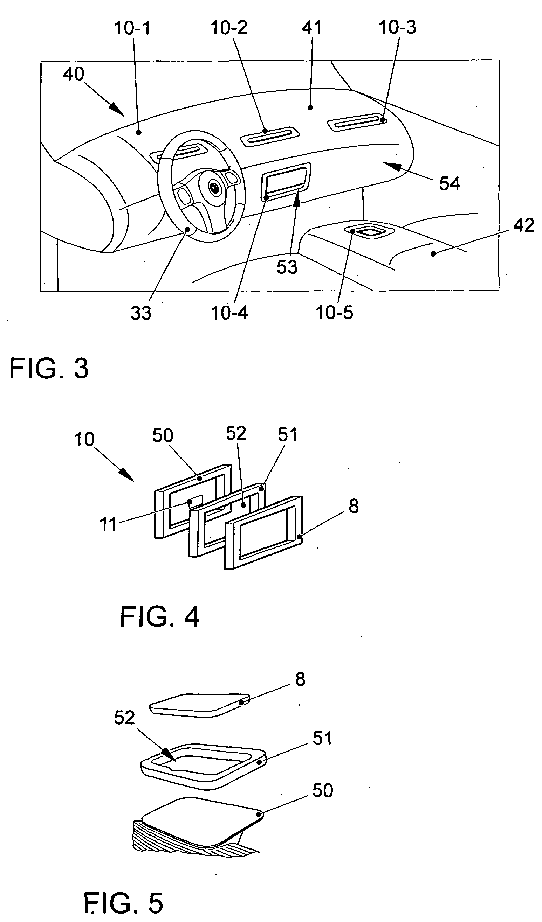

Um Komfortfunktionalitäten an unterschiedlichen Stellen im Fahrzeug 1 ohne einen erhöhten Hardware-Aufwand, insbesondere einen Verkabelungsaufwand, bereitstellen zu können, umfasst das Fahrzeug 1 eine Vielzahl von an unterschiedlichen Bauorten verbauten Halterungen 10-1 bis 10-5. Diese sind so ausgebildet, dass sie ein Mobilgerät 8-1, 8-2 aufnehmen können. Die Halterungen 10-1 bis 10-5 können so ausgebildet sein, dass sie an ein oder unterschiedliche Modelle von Mobilgeräten 8-1, 8-2 angepasst ausgebildet sind oder so ausgebildet seien, dass sie eine Vielzahl von unterschiedlichen und unterschiedlich ausgebildeten Mobilgeräten 8-1, 8-2 aufnehmen und haltern können. Beispielhafte Halterungen sind unten mit Bezug auf die Fig. 4 und 5 erläutert. Dem Fachmann sind jedoch eine Reihe von Halterungen für Mobilgeräte bekannt, die in der bekannten oder leicht modifizierten Weise an den unterschiedlichen Verbauorten im Innenraum des Fahrzeugs 1 verwendet werden können. Die Halterungen 10-1 bis 10-5 dienen nur zur mechanischen Haltung der Mobilgeräte 8-1, 8-2.

Jedem Verbauort bzw. jeder Halterung 10-1 bis 10-5 ist ein Identifikationsmodul 11-1 bis 11-5 zugeordnet. In jedem der Identifikationsmodule 11-1 bis 11-5 ist eine dem jeweiligen Verbauort bzw. die jeweilige Halterung 10-1 bis 10-5 eineindeutig zugeordnete Identifikationskennung ID-1 bis ID-5 gespeichert. Die Identifikationsmodule 11-1 bis 11-5 sind vorzugsweise als RFID-Module ausgebildet, die berührungslos elektronisch ausgelesen werden können. Vorzugsweise sind die Identifikationsmodule als passive RFID-Module ausgebildet, die eine benötigte Energie zum Auslesen und Ermitteln der Identifikationskennung einem elektromagnetischen Feld einer Ausleseeinrichtung entziehen.

Um unterschiedliche Funktionalitäten an den unterschiedlichen Verbauorten der Halterungen 10-1 bis 10-5 bzw. der Identifikationsmodule 11-1 bis 11-5 bereitstellen zu können, werden die Mobilgeräte 8-1, 8-2 genutzt. Wesentlich ist, dass ein und dasselbe Mobilgerät, beispielsweise 8-1 an den unterschiedlichen Verbauorten der Halterungen 10-1 bis 10-5 bzw. Verbauorten oder Identifikationsmodulen 11-1 bis 11-5 angeordnet werden kann, um einem Nutzer Komfortfunktionalitäten des Fahrzeugs bzw. der Fahrzeugssysteme 2 bereitzustellen. Hierbei werden abhängig von dem Verbauort unterschiedliche Funktionalitäten und/oder dieselben Funktionalitäten in unterschiedlicher Weise bereitgestellt.

Um diese Funktionalität bereitstellen zu können, umfassen die Mobilgeräte 8-1, 8-2 jeweils eine zentrale Verarbeitungseinrichtung 12-1, 12-2, welche beispielsweise als CPU ausgestaltet ist, und programmgesteuert betrieben wird. Hierfür ist die zentrale Verarbeitungseinrichtung 12-1, 12-2 mit einer Speichereinrichtung 13-1, 13-2 verbunden. In der Speichereinrichtung 13-1, 13-2 ist der Programmcode 14-1, 14-2 eines Computerprogrammprodukts abgelegt, der auf der zentralen Verarbeitungseinrichtung 12-1, 12-2 ausführbar ist. Mit der zentralen Verarbeitungseinrichtung 12-1, 12-2 sind eine Ausgabeeinrichtung 15-1, 15-2 sowie eine Eingabeeinrichtung 16-1, 16-2 gekoppelt. Die Ausgabeeinrichtung 15-1 ist beispielsweise als Anzeigefläche und die Eingabeeinrichtung 16-1 als Tastenfeld ausgebildet. Bei der Ausführungsform des Mobilgeräts 8-2 sind die Ausgabeeinrichtung 15-2 und die Eingabeeinrichtung 16-2 zu einer Touchscreeneinrichtung 17-2 zusammengefasst. Die Ausgabeeinrichtungen 15-1, 15-2 können neben der Anzeigeeinrichtung auch noch einen Lautsprecher, einen Kopfhörerausgang oder Ähnliches umfassen. Ebenso kann die Eingabeeinrichtung weitere zusätzliche Bedienelemente umfassen.

Die Mobilgeräte 8-1, 8-2 umfassen ferner eine Identifikationsmodul-Leseeinrichtung 20-1, 20-2. Ferner umfassen die Mobilgeräte 8-1, 8-2 eine Kommunikationseinrichtung 21-1, 21-2 zum Ausbilden einer drahtlosen Kommunikationsverbindung 7-1, 7-2 mit der Fahrzeugkommunikationsvorrichtung 6. Die Mobilgerätkommunikationseinrichtung 21-1, 21-2 und die Fahrzeugkommunikationsvorrichtung 6 sind so ausgebildet, dass eine drahtlose Kommunikation ohne eine Zwischenschaltung weiterer Sende- oder Relaisstationen innerhalb des Fahrzeuginnenraums stattfinden kann. Die Kommunikationsverbindung 7-1, 7-2 sind somit lokale Kommunikationsverbindungen für einen Datenaustausch zwischen dem Fahrzeug 1 und den jeweiligen Mobilgeräten 8-1, 8-2.

Die Mobilgeräte 8-1, 8-2 können weitere Einrichtungen umfassen, beispielsweise eine Digitalkamera 22-1, 22-2 oder ein Mobilfunkmodul 23-1, 23-2 zum Ausbilden von Mobilfunktelefonverbindungen. Hierbei können Mobilfunktelefonverbindungen oder Datenverbindungen gemäß unterschiedlichen Standards, beispielsweise GSM, GPRS, UMTS usw. ausgebildet werden.

Über den Programmcode 14-1, 14-2 wird die zentrale Verarbeitungseinrichtung 12-1, 12-2 des jeweiligen Mobilgeräts 8-1, 8-2 so gesteuert, dass zunächst über die Identifikationsmodul-Leseeinrichtungen 20-1, 20-2 die Identifikationskennungen ID-1, ID-2, der sich im Erfassungsbereich der Mobilgeräte 8-1, 8-2 befindlichen Identifikationsmodule 11-1, 11-2 ausgelesen werden. Ist ein solche Identifikationskennung erfasst, so werden von den Mobilfunkgeräten 8-1, 8-2 über die Mobilgerätekommunikationseinrichtung 21-1, 21-2 die Kommunikationsverbindungen 7-1, 7-2 und über die Fahrzeugkommunikationsvorrichtung 6 mit der Fahrzeugsteuerungsvorrichtung 4 aufgebaut. Über die Kommunikationsverbindungen 7-1, 7-2 werden mit der Fahrzeugsteuervorrichtung 4 Daten ausgetauscht, sodass über eine Nutzerschnittstelle, vorzugsweise eine grafische Benutzerschnittstelle (GUI - Grafical User Interface) Funktionalitäten von Fahrzeugssystemen 2 des Fahrzeugs 1 auf den Mobilgeräten 8-1, 8-2 bereitgestellt werden. Neben oder alternativ zu der Anzeige- und Bedienvorrichtung 5 können somit über die Mobilgeräte 8-1, 8-2 Funktionalitäten der Fahrzeugsysteme 2 genutzt und ggf. mittels über die Eingabeeinrichtungen 16-1, 16-2 erfasster Benutzereingaben und einer Datenübermittlung über die drahtlosen Kommunikationsverbindungen 7-1, 7-2 zu der Fahrzeugsteuerungsvorrichtung 4 von dieser gesteuert werden. Hierbei werden auf den unterschiedlichen Mobilgeräten 8-1, 8-2 unterschiedliche Funktionalitäten abhängig von den Identifikationskennungen ID-1, ID-2, die den Verbauorten bzw. Identifikationsmodulen 11-1, 11-4 zugeordnet sind, bereitgestellt.

Ist das mobile Gerät 8-1 bzw. sind die Halterung 10-1 und das Identifikationsmodul 11-1 im Bereich des Armaturenbretts vor dem Fahrer angeordnet, so werden hier beispielsweise auf der Ausgabeeinrichtung 15-1 bzw. dessen Anzeigefläche, fahrzeugbezogene Informationen, beispielsweise eine Fahrzeuggeschwindigkeit, eine Motordrehzahl, eine Öltemperatur oder Ähnliches angezeigt. Ferner werden bestimmte Infotainmentdaten nur verkleinert oder gar nicht dargestellt. Beispielsweise wird ein von einem Videoplayer abgespielter Spielfilm auf diesem Mobilgerät 8-1 nicht zur Anzeige gebracht, wenn das Fahrzeug in Bewegung ist. Zudem werden Tasten und/oder die Bedienung eines Touchscreens des Mobilgeräts 8-1 deaktiviert, wenn das Fahrzeug fährt und das Mobilgerät 8-1 in der Halterung 10-1 angeordnet ist. Die deaktivierten Funktionen können wieder aktiviert werden, sobald sich das Fahrzeug im Stillstand befindet. Die Berechtigung für die Steuerung von Fahrzeugfunktionen bzw. das Übertragen von Daten zu den Mobilgeräten 8-1, 8-2 ist bei einer Ausführungsform beispielsweise über eine Berechtigungseinrichtung 30 der Fahrzeugsteuerungsvorrichtung 4 geregelt. Ist der Verbauort der Halterung 10-4 bzw. des Identifikationsmoduls 11-4 beispielsweise in der Rückenlehne des Fahrersitzes angeordnet, so werden auf der als Touchscreen 17-1, 17-2 ausgebildeten Anzeigefläche der Ausgabeeinrichtung 15-2, insbesondere Multimediainformationen ausgegeben.

Für dasselbe Fahrzeugsystem werden somit die Informationen unter Umständen unterschiedlich ausgegeben, abhängig davon, an welchem Verbauort, d. h. in welcher Halterung und bei welchem Identifikationsmodul 11-1 bis 11-5 das entsprechende Mobilgerät 8-1, 8-2 angeordnet ist. Auch Bedienvorrichtungen des Fahrzeugs 1, beispielsweise eine Kreuzwippe 32 in einem Lenkrad 33 kann genutzt werden, um die Benutzerschnittstelle auf dem Mobilgerät 8-1 zu steuern.

Die Halterung 10-1 vor dem Lenkrad 33 kann beispielsweise so ausgebildet sein, dass die Digitalkamera 22-1 eine Umgebung des Fahrzeugs erfassen kann und auf der Anzeigefläche der Ausgabeeinrichtung 15-1 mit errechneten Informationen, beispielsweise Abständen zu Objekten, Fahrtrichtungsangaben, einem Bremsweg oder Ähnlichem, zu einer sogenannten Augmented Reality ergänzt werden kann.

Um sicherzustellen, dass die Benutzerschnittstelle nur dann und solange bereitgestellt wird, wie die jeweiligen Mobilgerät 8-1, 8-2 in einer der Halterungen 10-1 bis 10-5 bzw. in unmittelbarer Nähe eines der Identifikationsmodule 11-1 bis 11-5 angeordnet sind, wird die Identifikationskennung fortlaufend ausgelesen. Es können jedoch auch andere Mechanismen genutzt werden. Beispielsweise kann von der Fahrzeugssteuerungsvorrichtung 4 in Intervallen eine jeweils veränderte Abfragekennung über die Kommunikationsverbindung 7-1, 7-2 zu dem entsprechenden Mobilgerät 8-1, 8-2 übermittelt werden, die dann über die entsprechende Identifikationsmodul-Leseeinrichtung 20-2, 20-2 beim Auslesen der Identifikationskennung an das entsprechende Identifikationsmodul 11-1, 11-2 übermittelt wird. Dieses Identifikationsmodul 11-1, 11-2 ist so ausgebildet, dass das Identifikationsmodul individuell die Abfragekennung codiert und die codierte Abfragekennung beim Auslesen der Identifikationskennung zu der Identifikationsmodul-Leseeinrichtung 20-1, 20-2 zurück übermittelt. Diese wird dann zurück an die Fahrzeugsteuerungsvorrichtung 4 übermittelt bzw. an die Berechtigungseinrichtung 30, die dann überprüft, ob die Abfragekennung in erwarteter Weise codiert ist. Hierzu können beispielsweise asymmetrische Verschlüsselungsverfahren genutzt werden, wobei von einem Schlüsselpaar ein Schlüssel im Fahrzeug und ein Schlüssel in dem entsprechenden Identifikationsmodul gespeichert ist. Wird festgestellt, dass keine Identifikationskennung ausgelesen werden kann oder eine Abfragekennung, nicht korrekt codiert ist, so beenden das entsprechende Mobilgerät 8-1, 8-2 oder die Fahrzeugsteuerungsvorrichtung 4, die jeweils zugehörige Kommunikationsverbindung 7-1, 7-2. So kann sichergestellt werden, dass das Mobilgerät nicht an eine andere Position verbracht werden kann und dennoch auf Daten des Fahrzeugs und Fahrzeugsysteme zugreifen kann. Eine in entsprechender Weise verschlüsselte Identifikationskennung kann ebenfalls aus Sicherheitsgründen verwendet werden.

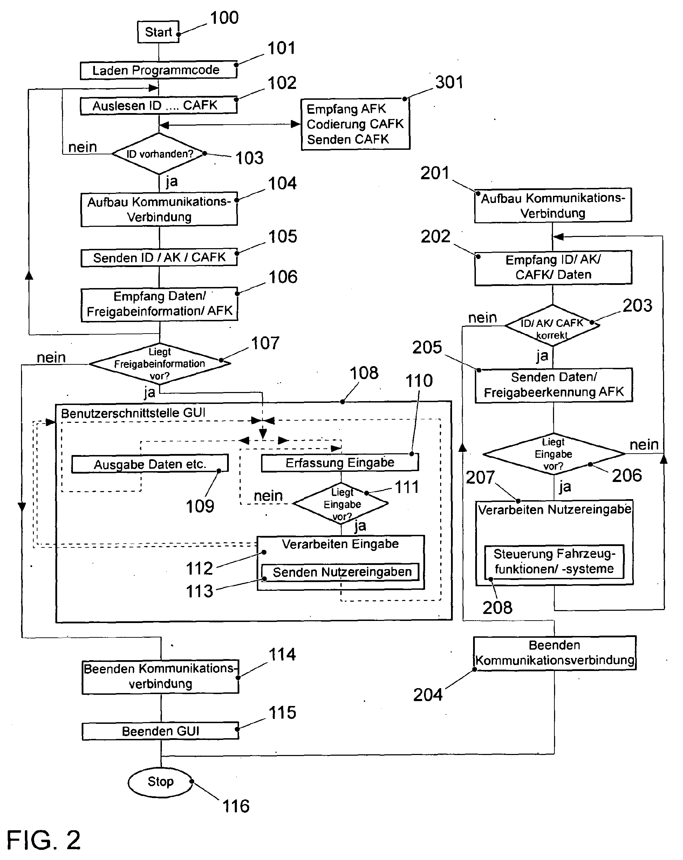

Anhand von Fig. 2 soll die durch ein Ausführen eines erfindungsgemäßen Computerprogrammprodukts auf einem Mobilgerät bereitgestellte Funktionalität erläutert werden. Das Computerprogrammprodukt bzw. dessen Programmcode 14 (vergl. Fig. 1) kann ursprünglich in einer Speichervorrichtung 35 des Fahrzeugs 1 abgelegt sein und über eine drahtlose Kommunikationsverbindung 7-1, 7-2 zu den Mobilgeräten 8-1, 8-2 übertragen sein.

Nach einem Start 100 wird zunächst der Programmcode geladen 101. Dieser veranlasst, dass die Identifikationsmodul-Leseeinrichtung einen Versuch unternimmt, ein als RFID-Modul ausgebildetes Identifikationsmodul auszulesen 102. In einer Abfrage 103 wird geprüft, ob eine Identifikationskennung (ID) erfasst ist. Ist dies nicht der Fall, so wird mit dem Auslesen der Identifikationskennung 102 fortgefahren. Im anderen Fall wird eine drahtlose Kommunikationsverbindung zu einer Fahrzeugssteuerungsvorrichtung des Fahrzeugs aufgebaut 104, 201. Hierbei oder anschließend wird die Identifikationskennung ID zu der Fahrzeugssteuerungsvorrichtung übersandt 105 und von dieser empfangen 202. Die Fahrzeugssteuerungsvorrichtung bzw. eine Berechtigungseinrichtung prüft, ob die Identifikationskennung zu einem der Identifikationsmodule in dem Fahrzeug gehört 203, ist dies nicht der Fall, so wird die im Schritt 201 aufgebaute Kommunikationsverbindung beendet 204. Ist die Identifikationskennung korrekt, was in der Abfrage 203 geprüft wird, werden an das Mobilgerät Daten und ggf. eine Freigabeinformation übermittelt 205. Es kann ebenso vorgesehen sein, dass zusätzlich zu der Identifikationskennung, welche aus dem Identifikationsmodul ausgelesen ist, eine Applikationskennung (AK) ermittelt wird, die den Programmcode des Computerprogrammprodukts identifiziert und autorisiert. Diese wird ebenfalls von der Fahrzeugsteuerungsvorrichtung empfangen 202 und in der Abfrage 203 auf Korrektheit geprüft. Ist diese unkorrekt, führt es ebenfalls zum Beenden der Kommunikationsverbindung seitens der Fahrzeugssteuerungsvorrichtung 204. Sind die Identifikationskennung und ggf. die Applikationskennung korrekt, so wird eine Freigabeinformation zu dem Mobilgerät übermittelt 205. Das Mobilgerät empfängt die Freigabeinformation bzw. Daten im Verfahrensschritt 106. Im Verfahrensschritt 107 wird geprüft, ob eine Freigabeinformation vorliegt. Liegt diese vor, so wird eine Benutzerschnittstelle, beispielsweise in Form einer grafischen Benutzerschnittstelle (GUI) bereitgestellt 108. Hierbei werden in der Regel Daten ausgegeben 109 und Eingaben erfasst 110. In einem Schritt 111 wird geprüft, ob eine Eingabe vorliegt und die Erfassung der Eingabe 110 fortgesetzt, sofern keine Eingabe erfasst ist, andernfalls wird die Eingabe verarbeitet 112, welches das Bereitstellen der grafischen Benutzerschnittstelle 108 beeinflussen kann. Ebenso kann die Nutzereingabe für eine Steuerung von Fahrzeugsystemen oder Fahrzeugfunktionen vorgesehen sein kann, in welchem Fall die Nutzereingaben an die Fahrzeugssteuerungsvorrichtung gesandt werden 113. Nach dem Empfangen der Daten 202 durch die Fahrzeugsteuerungsvorrichtung wird somit vom Fahrzeug geprüft, ob Nutzereingaben vorliegen 206 und diese entsprechend verarbeitet 207, was zu einer Steuerung der Fahrzeugfunktionen und Fahrzeugsysteme 208 führen kann. Hierbei wird erneut die Berechtigung für die entsprechenden Nutzereingaben bzw. Steuerungswünsche geprüft und sofern diese nicht vorliegt, eine Steuerung versagt (nicht dargestellt).

Das Bereitstellen der unterschiedlichen Funktionalitäten in der grafischen Benutzerschnittstelle erfolgt zum Einen darüber, dass der Programmcode unterschiedliche Module enthält, diese zur Ausführung gebracht werden, wenn eine entsprechende Freigabeinformation des entsprechenden Moduls vorliegt. Ferner kontrolliert die Berechtigungseinrichtung im Fahrzeug, welche Daten übermittelt werden und welche Nutzereingaben zur Steuerung von Fahrzeugsystemen akzeptiert werden. Um sicherzustellen, dass die Benutzerschnittstellen nur bereitgestellt wird 108, solange das Mobilgerät in einer Halterung bzw. in unmittelbarer Nähe eines Identifikationsmoduls befindet, sendet bei der dargestellten Ausführungsform das Fahrzeugssteuerungsgerät im Schritt 205 eine Abfragekennung, die bei jedem Senden neu festgelegt wird. Diese wird vom Mobilgerät beim Auslesen der Identifikationskennung 102 an das Identifikationsmodul übermittelt. Das Identifikationsmodul empfängt diese Abfragekennung, codiert die Abfragekennung in eine codierte Abfragekennung (CAFK) und übermittelt die codierte Abfragekennung beim Auslesen der Identifikationskennung zusammen mit oder alternativ zu der Identifikationskennung zurück zur Identifikationsmodul-Leseeinrichtung. Dieses sind Verfahrensschritte 301, die das RFID-Modul, d.h. das Identifikationsmodul, ausführt. Die codierte Abfragekennung wird dann im Verfahrensschritt 105, der während des Bereitstellens der Funktionalität fortlaufend und/oder iterativ ausgeführt wird, zu der Fahrzeugssteuerungsvorrichtung übermittelt, die diese im Verfahrensschritt 202 empfängt und im Verfahrensschritt 203 auf die korrekte Codierung prüft. Ist diese falsch, so wird die Kommunikationsverbindung beendet 204. Andernfalls werden eine neue Abfragekennung und Freigabeinformationen übermittelt. Stellt das Mobilgerät fest, dass keine Identifikationskennung mehr erfasst ist oder keine Freigabeinformation mehr vorliegt, so beendet das Mobilgerät die Kommunikationsverbindung 114 und anschließend die Benutzerschnittstelle 115. Hiermit ist die Bereitstellung der Funktionalität beendet 116.

In Fig. 3 ist eine schematische Zeichnung eines Innenraums 40 eines Kraftfahrzeugs dargestellt. In der dargestellten Ausführungsform sind im Innenraum 40 fünf Halterungen 10-1 bis 10-5 ausgebildet. Drei Halterungen 10-1 bis 10-3 sind auf dem Armaturenbrett 41 und Halterung 10-4 ist im Armaturenbrett 41 und eine Halterung 10-5 ist in einer Mittelarmlehne 42 vorgesehen.

In Fig. 4 ist schematisch eine Explosionszeichnung einer möglichen Halterung 10, beispielsweise der Halterung 10-4 nach Fig. 3 dargestellt. Auf einer Basisplatte 50 ist ein Identifikationsmodul 11 angeordnet, welches beispielsweise für eine Nachfeldkommunikation (NFC) ausgebildet ist. Auf der Basisplatte 50 ist ferner ein aus einem elastischen Material gebildete Schicht 51 aufgebracht, die eine zentrale Durchgangsöffnung 52 aufweist, welche an eine Kontur eines als Mobilfunktelefon ausgebildeten Mobilgeräts 8 angepasst ist. Das Mobilgerät 8 kann somit in die Durchgangsöffnung 52 der elastischen Schicht 51 eingebracht werden, sodass dieses bündig mit einer umgebenden Kontur, beispielsweise einem Armaturenbrett 41 abschließt. Hierbei wird die Halterung 10 vorzugsweise so im Fahrzeug angeordnet, dass dessen Vorderkante 53 bündig mit einer Vorderfront 54 des Armaturenbretts (vergl. Fig. 3) abschließt.

In Fig. 5 ist eine weitere Ausführungsform einer Halterung 10 schematisch dargestellt. Sie umfasst erneut eine Basisplatte 50 und eine elastische Schicht 51 mit einer Durchgangsöffnung 52 zum Aufnehmen eines Mobilgeräts 8. Das Identifikationsmodul ist bei dieser Ausführungsform in die Basisplatte 50 integriert bzw. hinter dieser Basisplatte angeordnet.

Es versteht sich für den Fachmann, dass lediglich beispielhafte Ausführungsformen beschrieben sind. Durch den Programmcode des Computerprogrammprodukts werden auf dem Mobilgerät, sofern dieses ein Mobilfunktelefon ist, beispielsweise folgende Funktionalitäten bereitgestellt: die Programmsteuerung zum Ausbilden der Benutzerschnittstelle, wie oben erläutert, die Funktionalität eines Radios, die Funktionalität eines Medienplayers, die Funktionalität eines Internetradios, die Funktionalität eines Telefons, die Funktionalität einer Kontaktverwaltung, videobasierte Augmented Reality-Funktionen, wie beispielsweise Navigationspfeile in einem Videobild, Visualisierung des Bremswegs des Fahrzeugs, eine Anzeige von Zusatzinformationen zu Objekten im Videobild, beispielsweise die Geschwindigkeit, eine Bezeichnung etc., die Darstellung von virtuellen Objekten mit GPS-Koordinaten in einem Videobild usw., einen Überblick über vorhandene Funktionen und Funktionalitäten sowie ggf. weitere Funktionen aus dem Bereich des Infotainment sowie der Fahrzeugsteuerung, beispielsweise von Klimafunktionen, Sitz- oder Fensterfunktionen usw.

Je nach dem in welcher Halterung das Mobilgerät angeordnet ist, werden unterschiedliche Funktionen bereitgestellt. Bei einer Platzierung des Mobilgeräts in einer Halterung hinter dem Lenkrad werden beispielsweise fahrtorientierte Funktionen priorisiert. Bei einer Platzierung in einer Halterung in der Mittelkonsole werden beispielsweise Infotainmentfunktionen und bei einer Platzierung in einer Halterung vor dem Beifahrer unterhaltungsorientierte Funktionen und Funktionalitäten priorisiert. Dies kann beispielsweise dadurch erfolgen, dass bestimmte zu bestimmten Funktionalitäten zugeordnete Elemente der Benutzerschnittstelle automatisch geöffnet werden bzw. zur Anzeige gebracht werden. Je nach dem in welcher Halterung das Mobilgerät angeordnet ist. Bei der Halterung hinter dem Lenkrad wird beispielsweise automatisch eine Augmented Reality-Funktion aktiviert. Ferner werden beispielsweise Funktionalitäten, die mit einer Videowiedergabe von aufgezeichnetem Videomaterial im Zusammenhang stehen, unterbunden. Auch die Art der Anzeige von Funktionen und Funktionalitäten wird abhängig von der verwendeten Halterung bzw. der Anordnung an einem bestimmten Verbauort unterschiedlich gehandhabt. Bei einer Anordnung hinter dem Lenkrad werden Infotainmentinformationen zur Statusanzeige reduziert. Fahrtrelevante Informationen, z. B. eine Geschwindigkeit oder Augmented Reality-Informationen werden hingegen maximiert. Einblendungen von Tasten im Falle des Vorliegens eines Touchscreens für eine Touchscreenbedienung werden maximiert, sofern das Mobilgerät in einer Mittelkonsole angeordnet ist, sodass dieses dort häufig angeordnete Anzeige- und Bedienvorrichtung ersetzt oder ergänzt.

### Bezugszeichenliste

- 1: Fahrzeug
- 2: Fahrzeugsystem
- 3: Fahrzeugdatenbus
- 4: Fahrzeugsteuerungsvorrichtung
- 5: Anzeige- und Bedienvorrichtung
- 6: Fahrzeugkommunikationsvorrichtung
- 7-1, 7-2: drahtlose Kommunikationsverbindung
- 8-1, 8-2: Mobilgerät,
- 10-1 bis 10-5: Halterung
- 11-1 bis 11-5: Identifikationsmodul
- ID-1 bis ID-5: Identifikationskennung
- 12-1, 12-2: zentrale Verarbeitungseinrichtung
- 13-1, 13-2: Speichereinrichtung
- 14, 14-1, 14-2: Programmcode
- 15-1, 15-2: Ausgabeeinrichtung
- 16-1, 16-2: Eingabeeinrichtung
- 17-2: Touchscreen
- 20-1, 20-1: Identifikationsmodul-Leseeinrichtung
- 21-1, 21-2: Mobilgerätkommunikationseinrichtung
- 22-1, 22-2: Digitalkamera
- 23-1, 23-2: Mobilfunkmodul
- 30: Berechtigungseinrichtung
- 32: Kreuzwippe
- 33: Lenkrad
- 35: Speichervorrichtung
- 40: Innenraum
- 41: Armaturenbrett
- 42: Mittelarmlehne
- 50: Basisplatte
- 51: elastische Schicht
- 52: Durchgangsöffnung
- 53: Vorderkante
- 54: Vorderfront Armaturenbrett
- 100 bis 116: Verfahrensschritte (Mobilgerät)
- 201 bis 208: Verfahrensschritte (Fahrzeug)
- 301: Verfahrensschritte (RFID)

## Patentansprüche

1. Fahrzeug (1) zum Ausbilden eines Komfortsystems, wobei das Fahrzeug umfasst:
eine Fahrzeugsteuerungsvorrichtung (4), mittels derer unterschiedliche Fahrzeugsysteme (2) und/oder Fahrzeugfunktionen steuerbar sind;
mindestens einer Fahrzeugkommunikationsvorrichtung (6) zum Austauschen von Daten über drahtlose Kommunikation;
mehreren im Fahrzeug (1) angeordnete Identifikationsmodule (11-1 bis 11-5), welche eine in einem Nahbereich des Identifikationsmoduls (11-1 bis 11-5) auslesbare Identifikationskennung (ID-1 bis ID-5) umfassen, welche einem jeweiligen Verbauort des Identifikationsmoduls (11-1 bis 11-5) zugeordnet ist;
wobei die Fahrzeugsteuerungsvorrichtung (4) ausgebildet ist, über die Fahrzeugkommunikationsvorrichtung (6) eine Kommunikationsverbindung (7-1, 7-2) mit einem Mobilgerät (8-1, 8-2) auszubilden, eine von dem Mobilgerät (8-1, 8-2) ausgelesene Identifikationskennung (ID-1 bis ID-5) über die Kommunikationsverbindung (7-1, 7-2) zu empfangen und selektiv abhängig von der der empfangenen Identifikationskennung (ID-1 bis ID-5) eine Steuerung und/oder Nutzung von einzelnen oder allen Fahrzeugfunktionen (2) und/oder-systemen über das Mobilgerät (8-1, 8-2) und die Kommunikationsverbindung (7-1, 7-2) zu zulassen oder zu unterbinden.

2. Komfortsystem umfassend:
ein Fahrzeug (1) mit:
einer Fahrzeugsteuerungsvorrichtung (4), mittels derer unterschiedliche Fahrzeugsysteme (2) und/oder Fahrzeugfunktionen steuerbar sind;
mindestens einer drahtlosen Fahrzeugkommunikationsvorrichtung (6) zum Austauschen von Daten mit einem Mobilgerät (8-1, 8-2);
mehreren im Fahrzeug (1) angeordneten Identifikationsmodulen (11-1 bis 11-5), welche eine auslesbare Identifikationskennung (ID-1 bis ID-5) umfassen, welche einem jeweiligen Verbauort des Identifikationsmoduls zugeordnet ist; und
ein Computerprogrammprodukt,
welches Programmcode (14-1, 14-2) umfasst, der auf einer programmgesteuerten Verarbeitungseinrichtung (12-1, 12-2) des Mobilgeräts (8-1, 8-2) ausführbar ist, welches
eine Identifikationsmodul-Leseeinrichtung (20-1, 20-2) zum Auslesen der Identifikationskennungen (ID-1 bis ID-5) aus Identifikationsmodulen (11-1 bis 11-2),
mindestens eine Eingabeeinrichtung (16-1, 16-2) zum Erfassen von Nutzereingaben,
mindestens eine Ausgabeeinrichtung (15-1, 15-2) sowie
eine Mobilgerätkommunikationseinrichtung (21-1, 21-2) umfasst, die jeweils über die programmgesteuerte Verarbeitungseinrichtung (12-1, 12-2) ansteuerbar sind,
wobei der Programmcode ausgebildet ist, die Identifikationsmodul-Leseeinrichtung (20-1, 20-2) anzusteuern, um mit dieser die Identifikationskennung (ID-1 bis ID5) eines der Identifikationsmodule (11-1 bis 11-5) in einem Erfassungsbereich der Identifikationsmodul-Leseeinrichtung (20-1, 20-2) zu erfassen, für den Fall, dass eine Identifikationskennung (ID-1 bis ID5) erfasst ist, eine drahtlose Kommunikationsverbindung (7-1, 7-2) zum Austauschen von Daten mit der Fahrzeugsteuerungsvorrichtung (4) über die Mobilgerätkommunikationseinrichtung (21) und die Fahrzeugkommunikationsvorrichtung (6) aufzubauen und abhängig von der erfassten Identifikationskennung und/oder den über die Kommunikationsverbindung (7-1, 7-2) ausgetauschten Daten unterschiedliche Funktionalitäten der Fahrzeugsysteme (2) und/oder Fahrzeugfunktionen für einen Benutzer mittels der mindestens einen Ausgabeeinrichtung (15-1, 15-2) und/oder der mindestens einen Eingabeeinrichtung (16-1, 16-2) bereitzustellen.

3. Gegenstand nach Anspruch 1 oder 2, **dadurch gekennzeichnet, dass** die Fahrzeugsteuerungsvorrichtung (4) eine Berechtigungsteuereinrichtung (30) umfasst, welche in Abhängigkeit von der übermittelten Identifikationskennung (ID-1 bis ID5) eine Berechtigung für ein Auslösen und/oder Bedienen der Fahrzeugfunktionen und/oder Fahrzeugsysteme (2) sowie für eine Rückübermittlung von Daten der Fahrzeugsysteme (2) und/oder Fahrzeugfunktionen an das Mobilgerät (8-1, 8-2) steuert.

4. Gegenstand nach einem der vorhergehenden Ansprüche, **dadurch gekennzeichnet, dass** an den Verbauorten Halterungen (10-1 bis 10-5) zur Aufnahme des Mobilgeräts (8,-1, 8-2) angeordnet oder ausgebildet sind, an oder in denen die Identifikationsmodule (11-1 bis 11-5) angeordnet sind.

5. Gegenstand nach Anspruch 4, **dadurch gekennzeichnet, dass** die Halterung (10-1 bis 10-5) eine oder mehrere elastische Elemente umfasst, in das oder zwischen die das Mobilgerät (8-1, 8-2) aufnehmbar ist.

6. Gegenstand nach einem der vorhergehenden Ansprüche, **dadurch gekennzeichnet, dass** die Identifikationsmodule (11-1 bis 11-5) jeweils mindestens einen RFID-Chip umfassen.

7. Gegenstand nach einem der vorhergehenden Ansprüche, **dadurch gekennzeichnet, dass** die Fahrzeugkommunikationsvorrichtung (6) und Mobilgerätkommunikationseinrichtung (21-1, 21-2) für eine drahtlose Kommunikation ausgebildet sind.

8. Gegenstand nach Anspruch 7, **dadurch gekennzeichnet, dass** die Fahrzeugkommunikationsvorrichtung (6) und Mobilgerätkommunikationseinrichtung (21-1, 21-2) Bluetooth- oder WLAN-Schnittstellen sind.

9. Gegenstand nach einem der Ansprüche 4 bis 8, falls rückbezogen auf Anspruch 4, **dadurch gekennzeichnet, dass** mindestens eine Halterung (10-1 bis 10-5) so ausgebildet ist, dass das in der Halterung (10-1 bis 10-5) angeordnete Mobilgerät (8-1, 8-2), welches eine Digitalkamera (22-1, 22-2) mit einer Erfassungsöffnung auf einer gegenüberliegenden Seite von einer Anzeigefläche einer Anzeigeeinrichtung umfasst, mittels der Digitalkamera (22-1, 22-2) eine Umgebung des Fahrzeugs (1) erfassen kann, und dass der Programmcode (14) ausgebildet ist, die Erfassung der Umgebung mittels der Digitalkamera (22-1, 22-2) zu veranlassen und auf der Anzeigefläche eine um Zusatzinformationen zu Objekten im Videobild und/oder um die Darstellung von virtuellen Objekten in dem Videobild ergänzte Realität der Umgebung des Fahrzeugs (1) mit Hilfe von über die Kommunikationsverbindung (7-1, 7-2) übermittelten Daten der Fahrzeugsteuerungsvorrichtung (4) anzuzeigen.

10. Computerprogrammprodukt für ein fahrzeugbezogenes Komfortsystem, wobei das Computerprogrammprodukt Programmcode (14) umfasst, der auf einer programmgesteuerten Verarbeitungseinrichtung eines Mobilgeräts (8-1, 8-2) ausführbar ist, welches eine Identifikationsmodul-Leseeinrichtung (20-1, 20-2) zum Auslesen der Identifikationskennungen (ID-1 bis ID5) aus Identifikationsmodulen (11-1 bis 11-5), mindestens eine Eingabeeinrichtung (16-1, 16-2) zum Erfassen von Nutzereingaben, mindestens eine Ausgabeeinrichtung (15-1, 15-2) sowie
eine Mobilgerätkommunikationseinrichtung (21-1, 21-2) umfasst, die jeweils über die programmgesteuerte Verarbeitungseinrichtung (12-1, 12-2) ansteuerbar sind, wobei der Programmcode (14) ausgebildet ist, die Identifikationsmodul-Leseeinrichtung (20-1, 20-2) anzusteuern, um mit dieser die Identifikationskennung (ID-1 bis ID5) eines der Identifikationsmodule (11-1 bis 11-5) in einem Erfassungsbereich der Identifikationsmodul-Leseeinrichtung (20-1, 20-2) zu erfassen, für den Fall, dass eine Identifikationskennung (ID-1 bis ID5) erfasst ist, eine drahtlose Kommunikationsverbindung (7-1, 7-2) zum Austauschen von Daten mit einer Fahrzeugsteuerungsvorrichtung (4) über die Mobilgerätkommunikationseinrichtung (21-1, 21-2) und
eine Fahrzeugkommunikationsvorrichtung (6) aufzubauen und abhängig von der erfassten Identifikationskennung (ID-1 bis ID5) und/oder den ausgetauschten Daten unterschiedliche Funktionalitäten von Fahrzeugsystemen (2) und/oder Fahrzeugfunktionen des Fahrzeugs (1) für einen Benutzer mittels der mindestens einen Ausgabeeinrichtung (15-1, 15-2) und/oder der mindestens einen Eingabeeinrichtung (16-1, 16-2) bereitzustellen.

11. Computerprogrammprodukt nach Anspruch 10, **dadurch gekennzeichnet, dass** der Programmcode (14) ausgebildet ist, die Identifikationsmodul-Leseeinrichtung (20-1, 20-2) so zu steuern, dass diese kontinuierlich oder in Intervallen die Identifikationskennung (ID-1 bis ID5) des im Erfassungsbereich befindlichen oder vermuteten Identifikationsmoduls (11-1 bis 11-5) ausliest, und eine Bereitstellung der Funktionalitäten der Fahrzeugsysteme (2) und/oder Fahrzeugfunktionen beendet wird, sobald das Auslesen fehlschlägt oder eine Änderung der Identifikationskennung (ID-1 bis ID5) erkannt wird.

## Claims

1. Vehicle (1) for forming a comfort system, wherein the vehicle comprises:
a vehicle control apparatus (4) that can be used to control different vehicle systems (2) and/or vehicle functions;
at least one vehicle communication apparatus (6) for interchanging data using wireless communication;
a plurality of identification modules (11-1 to 11-5), arranged in the vehicle (1), that comprise an identification identifier (ID-1 to ID-5) that can be read in a local area of the identification module (11-1 to 11-5) and that is associated with a respective installation location for the identification module (11-1 to 11-5);
wherein the vehicle control apparatus (4) is designed to use the vehicle communication apparatus (6) to form a communication link (7-1, 7-2) to a mobile device (8-1, 8-2), to receive an identification identifier (ID-1 to ID-5), which is read from the mobile device (8-1, 8-2), via the communication link (7-1, 7-2) and to take the received identification identifier (ID-1 to ID-5) as a basis for selectively permitting or preventing control and/or use of individual or all vehicle functions (2) and/or systems via the mobile device (8-1, 8-2) and the communication link (7-1, 7-2).

2. Comfort system comprising:
a vehicle (1) having:
a vehicle control apparatus (4) that can be used to control different vehicle systems (2) and/or vehicle functions;
at least one wireless vehicle communication apparatus (6) for interchanging data with a mobile device (8-1, 8-2);
a plurality of identification modules (11-1 to 11-5), arranged in the vehicle (1), that comprise a readable identification identifier (ID-1 to ID-5) that is associated with a respective installation location for the identification module; and
a computer program product
that comprises program code (14-1, 14-2) that can be executed on a program-controlled processing device (12-1, 12-2) of the mobile device (8-1, 8-2),
which comprises an identification module reading device (20-1, 20-2) for reading the identification identifiers (ID-1 to ID-5) from identification modules (11-1 to 11-2),
at least one input device (16-1, 16-2) for capturing user inputs,
at least one output device (15-1, 15-2) and also
a mobile device communication device (21-1, 21-2), which can each be actuated via the program-controlled processing device (12-1, 12-2),
wherein the program code is designed to actuate the identification module reading device (20-1, 20-2) in order to use it to capture the identification identifier (ID-1 to ID-5) of one of the identification modules (11-1 to 11-5) in a capture range of the identification module reading device (20-1, 20-2) if an identification identifier (ID-1 to ID-5) has been captured, to set up a wireless communication link (7-1, 7-2) for interchanging data with the vehicle control apparatus (4) via the mobile device communication device (21) and the vehicle communication apparatus (6) and to take the captured identification identifier and/or the data interchanged via the communication link (7-1, 7-2) as a basis for providing different functionalities of the vehicle systems (2) and/or vehicle functions for a user by means of the at least one output device (15-1, 15-2) and/or the at least one input device (16-1, 16-2).

3. Subject according to Claim 1 or 2, **characterized in that** the vehicle control apparatus (4) comprises an authorization control device (30) that takes the transmitted identification identifier (ID-1 to ID-5) as a basis for controlling an authorization to initiate and/or control the vehicle functions and/or vehicle systems (2) and to return data from the vehicle systems (2) and/or vehicle functions to the mobile device (8-1, 8-2).

4. Subject according to one of the preceding claims, **characterized in that** brackets (10-1 to 10-5) for holding the mobile device (8-1, 8-2) are arranged or formed at the installation locations, which brackets have the identification modules (11-1 to 11-5) arranged on or in them.

5. Subject according to Claim 4, **characterized in that** the bracket (10-1 to 10-5) comprises one or more elastic elements that can hold the mobile device (8-1, 8-2) in it or between them.

6. Subject according to one of the preceding claims, **characterized in that** the identification modules (11-1 to 11-5) each comprise at least one RFID chip.

7. Subject according to one of the preceding claims, **characterized in that** the vehicle communication apparatus (6) and mobile device communication device (21-1, 21-2) are designed for wireless communication.

8. Subject according to Claim 7, **characterized in that** the vehicle communication apparatus (6) and mobile device communication device (21-1, 21-2) are Bluetooth or WLAN interfaces.

9. Subject according to one of Claims 4 to 8, when referring back to Claim 4, **characterized in that** at least one bracket (10-1 to 10-5) is in form such that the mobile device (8-1, 8-2) arranged in the bracket (10-1 to 10-5), which mobile device comprises a digital camera (22-1, 22-2) having a capture opening on an opposite side from a display panel of a display device, can use the digital camera (22-1, 22-2) to capture surroundings of the vehicle (1), and **in that** the program code (14) is designed to prompt the capture of the surroundings by means of the digital camera (22-1, 22-2) and to display on the display panel a reality, augmented by supplementary information pertaining to objects in the video image and/or by the representation of virtual objects in the video image, from the surroundings of the vehicle (1) using data from the vehicle control apparatus (4) that are transmitted via the communication link (7-1, 7-2).

10. Computer program product for a vehicle-related comfort system, wherein the computer program product comprises program code (14) that can be executed on a program-controlled processing device of a mobile device (8-1, 8-2) that comprises
an identification module reading device (20-1, 20-2) for reading the identification identifiers (ID-1 to ID-5) from identification modules (11-1 to 11-5),
at least one input device (16-1, 16-2) for capturing user inputs,
at least one output device (15-1, 15-2) and also a mobile device communication device (21-1, 21-2), which can each be actuated via the program-controlled processing device (12-1, 12-2), wherein the program code (14) is designed to actuate the identification module reading device (20-1, 20-2) in order to use it to capture the identification identifier (ID-1 to ID-5) of one of the identification modules (11-1 to 11-5) in a capture range of the identification module reading device (20-1, 20-2)
if an identification identifier (ID-1 to ID-5) has been captured, to set up a wireless communication link (7-1, 7-2) for interchanging data with a vehicle control apparatus (4) via the mobile device communication device (21-1, 21-2) and
a vehicle communication apparatus (6) and to take the captured identification identifier (ID-1 to ID-5) and/or the interchanged data as a basis for providing different functionalities of vehicle systems (2) and/or vehicle functions of the vehicle (1) for a user by means of the at least one output device (15-1, 15-2) and/or the at least one input device (16-1, 16-2).

11. Computer program product according to Claim 10, **characterized in that** the program code (14) is designed to control the identification module reading device (20-1, 20-2) such that it reads the identification identifier (ID-1 to ID-5) of the identification module (11-1 to 11-5) situated or presumed in the capture range continuously or at intervals, and provision of the functionalities of the vehicle systems (2) and/or vehicle functions is terminated as soon as reading fails or a change in the identification identifier (ID-1 to ID-5) is detected.

## Revendications

1. Véhicule (1) destiné à former un système de confort, dans lequel le véhicule comprend :
un dispositif de commande de véhicule (4), au moyen duquel différents systèmes de véhicule (2) et/ou fonctions de véhicule peuvent être commandés ;
au moins un dispositif de communication (6) du véhicule servant à échanger des données par l'intermédiaire d'une communication sans fil ;
plusieurs modules d'identification (11-1 à 11-5) disposés dans le véhicule (1), qui comprennent un code d'identification (ID-1 à ID-5) lisible dans une zone proche du module d'identification (11-1 à 11-5) et associé à un emplacement de montage respectif du module d'identification (11-1 à 11-5) ;
dans lequel le dispositif de commande de véhicule (4) est réalisé pour établir, par l'intermédiaire du dispositif de communication de véhicule (6), une liaison de communication (7-1, 7-2) avec un appareil mobile (8-1, 8-2), pour recevoir un code d'identification (ID-1 à ID-5) lu par l'appareil mobile (8-1, 8-2) par l'intermédiaire de la liaison de communication (7-1, 7-2) et pour autoriser ou pour interdire de manière sélective en fonction du code d'identification (ID-1 à ID-5) reçu une commande et/ou une utilisation de certaines ou de la totalité des fonctions (2) et/ou des systèmes de véhicule par l'intermédiaire de l'appareil mobile (8-1, 8-2) et de la liaison de communication (7-1, 7-2).

2. Système de confort comprenant :
un véhicule (1) comportant :
un dispositif de commande de véhicule (4), au moyen duquel différents systèmes de véhicule (2) et/ou différentes fonctions de véhicule peuvent être commandés ;
au moins un dispositif de communication de véhicule (6) sans fil servant à échanger des données avec un appareil mobile (8-1, 8-2) ;
plusieurs modules d'identification (11-1 à 11-5) disposés dans le véhicule (1), qui comprennent un code d'identification (ID-1 à ID-5) lisible associé à un emplacement de montage respectif du module d'identification ; et
un produit de programme informatique comprenant un code de programme (14-1, 14-2) qui peut être exécuté sur un dispositif de traitement (12-1, 12-2) commandé par programme de l'appareil mobile (8-1, 8-2), qui comprend :
un dispositif de lecture de module d'identification (20-1, 20-2) servant à lire les codes d'identification (ID-1 à ID-5) à partir de modules d'identification (11-1 à 11-2),
au moins un dispositif d'entrée (16-1, 16-2) servant à détecter des entrées d'utilisateur,
au moins un dispositif de sortie (15-1, 15-2), et
un dispositif de communication pour appareil mobile (21-1, 21-2) qui peuvent respectivement être commandés par l'intermédiaire du dispositif de traitement (12-1, 12-2) commandé par programme,
dans lequel le code de programme est conçu pour commander le dispositif de lecture de module d'identification (20-1, 20-2), afin de détecter au moyen de celui-ci le code d'identification (ID-1 à ID-5) de l'un des modules d'identification (11-1 à 11-5) dans une zone de détection du dispositif de lecture de module d'identification (20-1, 20-2), pour le cas où un code d'identification (ID-1 à ID-5) est détecté, pour établir une liaison de communication sans fil (7-1, 7-2) servant à échanger des données avec le dispositif de commande de véhicule (4) par l'intermédiaire du dispositif de communication pour appareil mobile (21) et du dispositif de communication de véhicule (6) et pour fournir, en fonction du code d'identification détecté et/ou des données échangées par l'intermédiaire de la liaison de communication (7-1, 7-2) des fonctionnalités différentes des systèmes de véhicule (2) et/ou des fonctions de véhicule pour un utilisateur au moyen de l'au moins un dispositif de sortie (15-1, 15-2) et/ou de l'au moins un dispositif d'entrée (16-1, 16-2).

3. Objet selon la revendication 1 ou 2, **caractérisé en ce que** le dispositif de commande de véhicule (4) comprend un dispositif de commande d'autorisation (30) qui commande, en fonction du code d'identification (ID-1 à ID-5) déterminé une autorisation pour un déclenchement et/ou une utilisation des fonctions de véhicule et/ou des systèmes (2) de véhicule ainsi que pour un renvoi de données des systèmes de véhicule (2) et/ou des fonctions de véhicule à l'appareil mobile (8-1, 8-2).

4. Objet selon l'une quelconque des revendications précédentes, **caractérisé en ce que** des supports (1-10 à 10-5) destinés à recevoir l'appareil mobile (8-1, 8-2) sont disposés ou réalisés aux emplacements de montage sur ou dans lesquels sont disposés les modules d'identification (11-1 à 11-5).

5. Objet selon la revendication 4, **caractérisé en ce que** le support (10-1 à 10-5) comprend un ou plusieurs éléments élastiques dans lequel ou entre lesquels l'appareil mobile (8-1, 8-2) peut être reçu.

6. Objet selon l'une quelconque des revendications précédentes, **caractérisé en ce que** les modules d'identification (11-1 à 11-5) comprennent respectivement au moins une puce RFID.

7. Objet selon l'une quelconque des revendications précédentes, **caractérisé en ce que** le dispositif de communication de véhicule (6) et le dispositif de communication pour appareil mobile (21-1, 21-2) sont réalisés pour une communication sans fil.

8. Objet selon la revendication 7, **caractérisé en ce que** le dispositif de communication de véhicule (6) et le dispositif de communication pour appareil mobile (21-1, 21-2) sont des interfaces Bluetooth ou WLAN.

9. Objet selon les revendications 4 à 8, dans le cas où elles dépendent de la revendication 4, **caractérisé en ce qu'**au moins un support (10-1 à 10-5) est réalisé de manière à ce que l'appareil mobile (8-1, 8-2) disposé dans le support (10-1 à 10-5), qui comprend une caméra numérique (22-1, 22-2) ayant une ouverture de détection sur une face opposée d'une surface d'affichage d'un dispositif d'affichage, puisse détecter un environnement du véhicule (1) au moyen de la caméra numérique (22-1, 22-2) et **en ce que** le code de programme (14) est conçu pour provoquer la détection de l'environnement au moyen de la caméra numérique (22-1, 22-2) et pour afficher sur la surface d'affichage une réalité augmentée de l'environnement du véhicule (1), par des informations supplémentaires concernant des objets présents dans l'image vidéo et/ou par la représentation d'objets virtuels dans l'image vidéo à l'aide de données transmises par l'intermédiaire de la liaison de communication (7-1, 7-2) du dispositif de commande de véhicule (4).

10. Produit de programme informatique destiné à un système de confort pour véhicule, dans lequel le produit de programme informatique comprend un code de programme (14) qui peut être exécuté sur un dispositif de traitement commandé par programme d'un appareil mobile (8-1, 8-2) comprenant un dispositif de lecture de module d'identification (20-1, 20-2) destiné à lire les codes d'identification (ID-1 à ID-5) à partir de modules d'identification (11-1 à 11-5),
au moins un dispositif d'entrée (16-1, 16-2) destiné à détecter des entrées d'utilisateur,
au moins un dispositif de sortie (15-1, 15-2) et
- un dispositif de communication pour appareil mobile (21-1, 21-2), qui peuvent être respectivement commandés par l'intermédiaire du dispositif de traitement commandé par programme (12-1, 12-2), dans lequel le code de programme (14) est conçu pour commander le dispositif de lecture de module d'identification (20-1, 20-2) afin de détecter au moyen de celui-ci le code d'identification (ID-1 à ID-5) de l'un des modules d'identification (11-1 à 11-5) dans une zone de détection du dispositif de lecture de module d'identification (20-1, 20-2), pour le cas où un code d'identification (ID-1 à ID-5) est détecté, pour établir une liaison de communication sans fil (7-1, 7-2) servant à échanger des données avec un dispositif de commande de véhicule (4) par l'intermédiaire du dispositif de communication pour appareil mobile (21-1. 21-2) et d'un dispositif de communication de véhicule (6) et pour fournir, en fonction du code d'identification (ID-1 à ID-5) détecté et/ou des données échangées des fonctionnalités différentes des systèmes de véhicule (2) et/ou des fonctions de véhicule (1) pour un utilisateur au moyen de l'au moins un dispositif de sortie (15-1, 15-2) et/ou de l'au moins un dispositif d'entrée (16-1, 16-2).

11. Produit de programme informatique selon la revendication 10, **caractérisé en ce que** le code de programme (14) est conçu pour commander le dispositif de lecture de module d'identification (20-1, 20-2), de manière à ce qu'il lise en continu ou par intervalles le code d'identification (ID-1 à ID-5) du module d'identification (11-1 à 11-5) se trouvant ou présumé être dans la zone de détection et à ce qu'une fourniture des fonctionnalités des systèmes de véhicule (2) et/ou des fonctions de véhicule soit interrompue dès que la lecture a échoué ou qu'une modification du code d'identification (ID-1 à ID-5) a été détectée.
